# FASCICULE DE BREVET EUROPEEN

(11) **EP 4 698 436 B1**
(45) Date de publication et mention de la délivrance du brevet: **05.08.2026**
(21) Numéro de dépôt: 24805194.8
(22) Date de dépôt: 10.10.2024
(51) Int. Cl.: B64G 1/22, B64G 1/64

(54) **DISPOSITIF DE RETENUE ET DE LIBÉRATION D'UN SYSTÈME EMBARQUÉ PAR RAPPORT À UN ENGIN SPATIAL**
VORRICHTUNG ZUM HALTEN UND LÖSEN EINES BORDSYSTEMS AN UND VON EINEM RAUMFAHRZEUG
DEVICE FOR RETAINING AND RELEASING AN ON-BOARD SYSTEM ON AND FROM A SPACECRAFT

(30) Priorité: 20.10.2023 FR 2311220
(43) Date de publication de la demande: 25.02.2026
(73) Titulaire: Airbus Defence and Space SAS, 31402 Toulouse Cedex 4 (FR)
(72) Inventeur: MORAINE, Adrien, 31402 TOULOUSE CEDEX 4 (FR)
(74) Mandataire: Plasseraud IP
(86) Numéro de dépôt international: PCT/FR2024/051334
(87) Numéro de publication internationale: WO 2025/083352

(56) Documents cités:
- CN-A- 110 667 894
- US-A1- 2019 031 374
- US-A1- 2021 094 707
- US-A1- 2021 293 225
- US-B1- 10 029 809

## Description

### Domaine technique

La présente divulgation relève du domaine des équipements d'engins spatiaux, notamment des satellites ou des lanceurs et concerne plus particulièrement un dispositif de retenue et de libération d'un système embarqué par rapport à un engin spatial.

### Technique antérieure

Les dispositifs de retenue et libération sont utilisés pour des systèmes embarqués déployables d'engins spatiaux, notamment de satellites. Les systèmes embarqués peuvent par exemple être des mâts télescopiques, des antennes, des panneaux solaires, des réflecteurs, ou des équipements d'observation ou de visée, qui sont classiquement maintenus contre le satellite, lors du lancement, dans une configuration dite de lancement. Les systèmes embarqués sont par exemple repliés de façon à limiter autant que possible le volume occupé par les systèmes embarqués lorsqu'ils se trouvent dans la coiffe du lanceur, dont le volume est restreint. Une fois l'engin spatial lancé, les systèmes embarqués sont déployés, dans une configuration de déploiement, pour adopter une position opérationnelle, qui peut être variable au cours de l'usage de l'engin spatial.

Les dispositifs de retenue et libération sont également utilisés pour le maintien d'un ou plusieurs systèmes embarqués, tels qu'une pile de satellites sur le lanceur, une telle pile étant par exemple maintenue solidaire du lanceur dans la configuration de lancement.

Les dispositifs de retenue et libération comprennent généralement des systèmes de prétensionnement, c'est-à-dire de mise en précharge, libérables aux niveaux des points de gerbage, c'est-à-dire des points de retenue compacts et raides des systèmes embarqués ou des engins spatiaux, notamment lorsque les systèmes embarqués ou engins spatiaux sont de grande masse et/ou de grande dimension, typiquement de masse supérieure à 10kg voire 15kg et/ou de dimension (longueur et/ou largeur) supérieure à 0,5 m voire 1 m.

Les dispositifs de retenue et libération plaquent usuellement les systèmes embarqués contre un support, à cause de contraintes mécaniques et d'accommodation. Cela implique généralement d'avoir des tirants préchargés à des niveaux de précharge élevés. Les tirants sont généralement de diamètre réduit à cause de contraintes de masse, ce qui induit une minimisation de la raideur du tirant et donc une augmentation du niveau d'énergie de déformation stockée dans le tirant.

Pour maintenir le tirant préchargé au lancement puis pour le relâcher au déploiement, on utilise un mécanisme de verrouillage et déblocage, communément appelé HDRM (acronyme de l'anglais Hold-Down and Release Mechanism). Il existe de nombreux types de mécanismes de verrouillage et déblocage, utilisant par exemple des systèmes pyrotechniques, c'est-à-dire mettant en œuvre la combustion en vue de la destruction d'une pièce de liaison, ou des systèmes électromagnétiques ou encore des systèmes se basant sur la séparation par chauffage des pièces à séparer. On connaît par exemple la demande de brevet WO 2017/055706 portant sur un dispositif de séparation contrôlée entre deux pièces, déposée au nom d'AIRBUS DEFENCE AND SPACE SAS.

La précharge est relâchée généralement brutalement, c'est-à-dire en quelques dizaines de millisecondes, par le HDRM. Ainsi, l'énergie de déformation stockée dans le tirant est brutalement relâchée et transférée à l'engin spatial ou à un appendice déployable.

Lors de ces transferts brutaux d'énergie, le choc créé pourrait avoir pour effet d'endommager des éléments environnants et pourrait nécessiter de surdimensionner ces éléments environnants afin de leur permettre de résister à ce niveau de choc.

Il existe ainsi un besoin d'empêcher l'endommagement des éléments environnants dans l'engin spatial lorsque la précharge est relâchée, sans toutefois surdimensionner, donc alourdir, les systèmes embarqués.

Des solutions pour répondre à ce besoin ont été proposées.

Parmi elles, comme notamment dans le brevet EP 2 279 120 intitulé « dispositif servant à assembler des objets puis à les libérer rapidement », une solution consiste à concevoir le point de gerbage avec une forme conique ajustée et un système de ressort fil ou bande, ce qui permet de relâcher progressivement la précharge dans le tirant et ainsi de dissiper l'énergie de déformation en frottement. Une telle solution se limite à un relâchement de la précharge sur quelques millimètres et ne répond donc pas à des besoins de tirants très longs et donc très souples. Par ailleurs, les coûts générés par cette solution sont plus élevés par rapport à des HDRM de type écrou séparateur.

Une autre solution connue consiste à transformer l'énergie de déformation du tirant en énergie cinétique, de manière à éjecter complètement le tirant. Cette solution n'est pas compatible avec une utilisation éthique et raisonnée de l'environnement spatial en orbite terrestre visant à limiter les débris en orbite.

Encore une autre solution connue reprend la précédente et consiste à ajouter un système d'absorption ou de dissipation d'énergie, un tel système pouvant être de nature :
- élastique, de type ressort ou suspension, mais dans ce cas, le système d'absorption ou de dissipation d'énergie peut être très lourd, typiquement de 200 J/Kg, ou générer trop de chocs sur les forts niveaux d'énergie élastique stockés ; ou
- élastomère ou autre matériau de même type, mais une telle solution génère les mêmes problèmes que pour le système de nature élastique auxquels s'ajoute une problématique de compatibilité des matériaux à l'environnement spatial; ou
- à dissipation d'énergie par plastification mécanique, tel qu'un nid d'abeilles écrasable ou un fusible mécanique, mais une telle solution pose encore les mêmes problèmes que les deux précédentes, et peut être hasardeuse quant à la garantie d'absence de génération de débris ou de contamination particulaire ; ou encore
- à amortissement visqueux fluidique, mais la mise en œuvre d'une telle solution peut être complexe dans l'environnement spatial et pour de la très haute fiabilité.

Une autre solution connue consiste à utiliser le logement de l'écrou pour dissiper une partie de l'énergie par des efforts électro-magnétiques mais cela reste limité quant à son utilisation et limité d'un point de vue opérationnel. Le logement de l'écrou représente notamment un encombrement et une masse supplémentaire. La mise en tension du câble est en outre particulièrement limitée, ainsi que l'amortissement.

US 2019/031374 A1 divulgue un dispositif de retenue et libération d'un système embarqué par rapport à un engin spatial.

US 2021/293225 A1 divulgue un dispositif de récupération de boulon destiné à être utilisé avec les écrous de séparation comportant un système d'amortissement magnétique.

Il apparaît ainsi le besoin d'améliorer les dispositifs de retenue et libération existants.

### Résumé

La présente divulgation vient améliorer la situation.

Il est proposé un dispositif de retenue et libération d'un système embarqué par rapport à un engin spatial, le dispositif de retenue et libération comprenant :
- au moins un socle de support solidaire de l'engin spatial, le dispositif de retenue et libération étant configuré pour retenir le système embarqué contre le socle de support en configuration de lancement et pour libérer le système embarqué en configuration de déploiement,
- au moins un tirant, ledit tirant étant étiré selon un axe longitudinal en configuration de lancement,
- au moins un système de mise en précharge configuré pour précharger ledit tirant en configuration de lancement avec une énergie de déformation déterminée, ledit système de mise en précharge comprenant une tête disposée à une première extrémité dudit tirant,
- au moins un mécanisme de maintien et relâchement disposé à une deuxième extrémité dudit tirant, configuré pour retenir ledit tirant préchargé en configuration de lancement, et pour libérer ledit tirant en configuration de déploiement de manière à transformer ladite énergie de déformation en une énergie cinétique avec une vitesse initiale déterminée de déplacement du tirant.

Le dispositif de retenue et libération comprend en outre :
- un système d'amortissement magnétique comportant :
   ∘ au moins un tube électriquement conducteur ayant deux extrémités ouvertes formant un passage traversant, ledit tube étant disposé autour du tirant, entre la tête et le mécanisme de maintien et relâchement, ledit tube étant fixe relativement au socle de support au moins en configuration de lancement et étant relié au socle de support ou au système embarqué,
   ∘ au moins un aimant permanent fixé au tirant et intercalé entre le tirant et ledit au moins un tube,
   ledit au moins un aimant et ledit au moins un tube étant configurés de manière à ce que la vitesse de déplacement dudit au moins un aimant en configuration de déploiement crée des courants de Foucault dans ledit au moins un tube de manière à dissiper l'énergie cinétique en chaleur et ainsi réduire la vitesse de déplacement du tirant jusqu'à une vitesse finale négligeable ou nulle après que ledit au moins un aimant a parcouru une distance déterminée en vis-à-vis dudit au moins un tube.

La solution proposée dans la présente divulgation présente de multiples avantages. La solution proposée selon la présente invention est avantageusement compacte et de masse réduite. En particulier, elle permet de réutiliser des éléments environnants.

La solution proposée selon la présente divulgation permet également de répondre à des besoins de tirants très longs et donc très souples avec des déformations longitudinales importantes par exemple de 10mm ou plus.

La solution proposée selon la présente divulgation permet aussi de ne pas générer de débris. De plus, elle ne crée pas de pollution autre que magnétique à très basse fréquence.

La solution proposée selon la présente divulgation peut être réutilisable à l'infini notamment pour les tests de validation du mécanisme.

La solution proposée selon la présente divulgation est peu coûteuse à mettre en œuvre car elle ne cause que peu de contraintes de montage ou d'utilisation. Elle constitue un système passif, à l'exception du mécanisme de maintien et relâchement comportant généralement un écrou séparateur également peu coûteux.

La solution proposée selon la présente divulgation permet une maîtrise complète et ajustable, par conception ou par essais, du niveau de dissipation d'énergie sous forme de chaleur. En outre, ce niveau de dissipation peut être ajusté aisément même très tardivement dans le cycle de développement du produit.

La présente divulgation permet de laisser s'éjecter, de manière contrôlée, le ou les tirants mais en y associant le système d'amortissement formant un système de dissipation d'énergie par courants de Foucault.

La présence du système d'amortissement permet de dissiper de manière contrôlée l'énergie de déformation stockée dans le ou les tirants afin de limiter les chocs exportés vers le système embarqué ou les risques d'endommagement.

Les caractéristiques exposées dans les paragraphes suivants peuvent, optionnellement, être mises en œuvre, indépendamment les unes des autres ou en combinaison les unes avec les autres.

Le dispositif de retenue et libération peut comporter un espace de dégagement dans le prolongement de la tête. Un tel espace libre de dégagement permet le mouvement de la tête lors du déploiement.

Ladite distance de déplacement déterminée dudit au moins un aimant est de préférence supérieure à 50 mm, étant de préférence comprise entre 200 mm et 350 mm.

La longueur dudit au moins un tube s'étendant vers la tête, à partir dudit au moins un aimant, peut être supérieure à ladite distance déterminée de déplacement du tirant d'au moins un écart déterminé.

Le dispositif de retenue et libération peut comporter en outre un ensemble de guidage configuré pour guider de manière linéaire le tirant dans son déplacement. L'ensemble de guidage peut comporter au moins un guide disposé selon l'axe longitudinal du tirant et fixe par rapport au tirant ou par rapport au socle de support.

Chaque guide peut être disposé à une distance déterminée de la tête du tirant en fonction d'au moins un ventre de flambage déterminé en fonction de la vitesse initiale de déplacement du tirant, de la longueur du tirant et de la distance de l'aimant par rapport à la tête.

Le ou les guides disposés dans le tube et présents entre le tirant et la paroi intérieure du tube permet d'assurer une cinématique rectiligne.

Le dispositif de retenue et libération peut comporter en outre au moins un ressort de rappel disposé autour du tirant et venant en appui, au moins temporaire, contre un élément solidaire du tirant, notamment contre une butée présente sur le tirant, et contre un élément solidaire du socle de support, notamment contre la tête, au moins en configuration de lancement, pour ramener le tirant libéré dans une position finale prédéterminée, ladite position finale prédéterminée du tirant correspondant à une distance finale de déplacement dudit au moins un aimant inférieure à ladite distance de déplacement déterminée dudit au moins un aimant.

La présence de ressort(s) de rappel permet d'absorber l'énergie résiduelle en fin de course et de garantir une meilleure répétabilité et stabilité du tirant en position finale.

Ledit au moins un ressort de rappel peut être situé dans une portion du tirant qui est non entourée dudit au moins un tube. Il peut y avoir plusieurs ressorts, notamment au moins deux. Le ou les ressorts sont légèrement contraints lors du lancement, ils ont un niveau d'énergie stockée faible.

Ledit au moins un aimant peut présenter un moment magnétique choisi en fonction de ladite distance de déplacement déterminée et en fonction de l'énergie de déformation.

Ledit au moins un tube peut présenter une section cylindrique de diamètre moyen compris entre 10 mm et 50 mm, notamment égal à 20 mm et présentant une épaisseur comprise entre 1 mm et 5 mm, notamment égale à 2 mm.

Le tirant peut présenter un élancement, c'est-à-dire un rapport longueur sur diamètre, au moins égal à 10, de préférence supérieur ou égal à 100. Le tirant présente de préférence une longueur supérieure ou égale à 0,5 m, notamment une longueur comprise entre 0,5 m et 10 m, notamment entre 1 m et 3 m. Le tirant présente de préférence un diamètre inférieur ou égal à 100 mm, notamment un diamètre compris entre 1 m et 20 mm.

Le dispositif de retenue et libération peut être configuré de telle sorte que la vitesse de déplacement initiale du tirant en configuration de déploiement soit supérieure ou égale à 0,1 m.s⁻¹.

Ledit au moins un tube peut être réalisé en un matériau métallique avec une conductivité supérieure à 10⁶, de préférence supérieure à 10*10⁶, étant de préférence réalisé en aluminium.

Le système embarqué peut être un mât télescopique comportant une tige filetée creuse d'entraînement lors de son déploiement et constituant ledit au moins un tube.

Alternativement, le système embarqué peut être une pile de satellites.

Le système de mise en précharge peut être configuré de telle sorte que la précharge dans le tirant créée par le système de mise en précharge en configuration de lancement soit comprise entre 1N et 1000kN, notamment supérieure à 500 N, voire supérieure à 1000 N.

Le système de mise en précharge peut être configuré de telle sorte que ladite énergie de déformation déterminée stockée dans le tirant en configuration de lancement est supérieure à 10 Joules, étant par exemple environ égale à 60 Joules.

Selon un autre aspect, il est proposé un engin spatial transportant un système embarqué solidarisé à l'engin spatial, en configuration de lancement, par au moins un dispositif de retenue et libération tel que défini plus haut.

### Brève description des dessins

D'autres caractéristiques, détails et avantages apparaîtront à la lecture de la description détaillée ci-après, et à l'analyse des dessins annexés, sur lesquels :
[Fig. 1] montre schématiquement en vue de côté partielle un exemple de dispositif de retenue et libération d'un système embarqué par rapport à un engin spatial en configuration de lancement.
[Fig. 2] est une vue similaire à la figure 1 du dispositif de retenue et libération de cet exemple au cours du déploiement.
[Fig. 3] est une vue similaire à la figure 1 du dispositif de retenue et libération de cet exemple en fin de déploiement.
[Fig. 4] montre schématiquement, partiellement et en vue de côté un exemple d'engin spatial transportant un système embarqué solidarisé à l'engin spatial par un dispositif de retenue et libération tel qu'illustré sur les figures 1 à 3.
[Fig. 5] montre un graphe illustrant le déplacement du tirant et le niveau d'énergie en fonction du temps, au cours du déploiement, dans l'exemple des figures 1 à 4.
[Fig. 6] est une vue similaire à la figure 4 d'un autre exemple d'engin spatial transportant un système embarqué solidarisé à l'engin spatial par un dispositif de retenue et libération, en configuration de lancement.
[Fig. 7] est une vue similaire à la figure 1 du dispositif de retenue et libération selon l'exemple de la figure 6.
[Fig. 8] est une vue similaire à la figure 1 d'un autre exemple de dispositif de retenue et libération pour retenir et libérer un autre système embarqué par rapport à un autre engin spatial, en configuration de lancement.

### Description des modes de réalisation

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

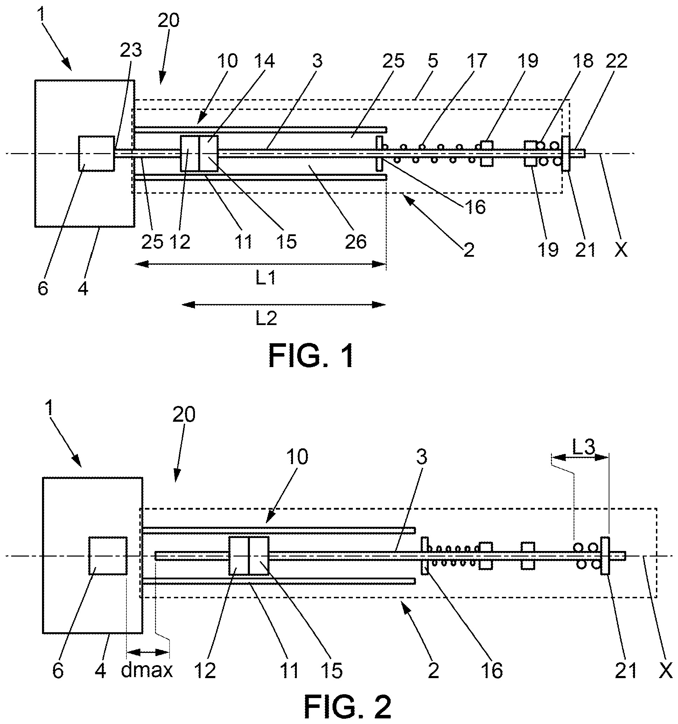

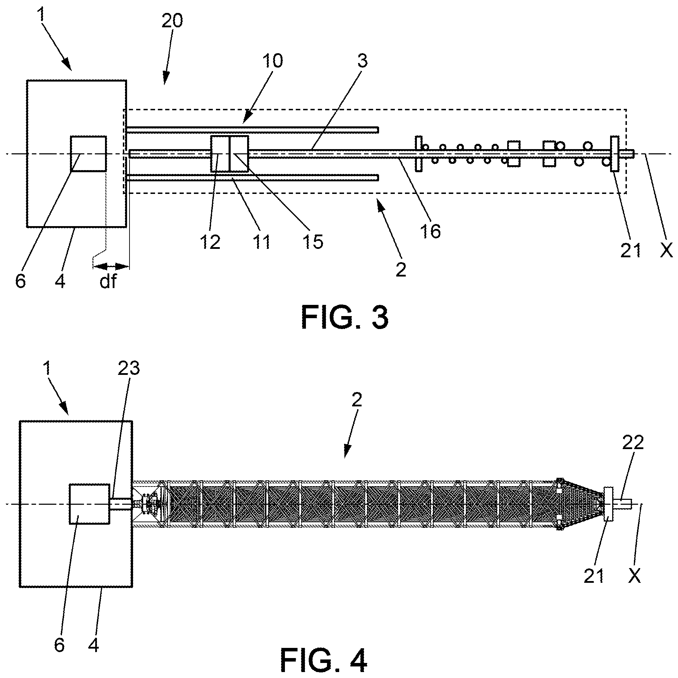

Il est maintenant fait référence à l'exemple illustré sur les figures 1 à 4. On y voit représenté un exemple de dispositif de retenue et libération 20 d'un système embarqué 2, davantage visible sur la figure 4, par rapport à un engin spatial 1 comportant un socle de support 4. Le dispositif de retenue et libération 20 est configuré pour retenir le système embarqué 2 contre le socle de support 4 en configuration de lancement illustrée sur la figure 1 et également sur la figure 4 et pour libérer ou déployer le système embarqué 2 en configuration de déploiement, illustrée sur les figures 2 et 3.

Comme représenté figure 1, le dispositif de retenue et libération 20 comprend au moins un tirant 3, dans cet exemple un tirant 3. Le tirant 3 est allongé selon un axe longitudinal X. Le tirant 3 se présente sous la forme d'une tige métallique pleine. Le tirant 3 présente dans cet exemple un élancement, c'est-à-dire un rapport de la longueur sur le diamètre, au moins égal à 10, de préférence supérieur ou égal à 100. En particulier, le tirant 3 présente de préférence une longueur supérieure ou égale à 0,5 m, notamment une longueur comprise entre 0,5 m et 10 m, notamment entre 1 m et 3 m, dans cet exemple égale à 2 m. Par ailleurs, le tirant 3 présente de préférence un diamètre inférieur ou égal à 100 mm, notamment un diamètre compris entre 1 mm et 20 mm, dans cet exemple égal à 4 mm. L'élancement du tirant 3 dans cet exemple est de 500. Ainsi, le tirant 3 est très long et très mince. Le tirant 3 peut être réalisé en un matériau choisi dans le groupe constitué par un acier stub laminé, un carbone pultrudé, un titane et leurs alliages.

Le dispositif de retenue et libération 20 comporte par ailleurs au moins un système de mise en précharge 5 configuré pour précharger le tirant 3 en configuration de lancement avec une énergie de déformation déterminée E_{def max}. Le système de mise en précharge 5 comprend une tête 21 disposée à une première extrémité 22 du tirant 3. Dans cet exemple, la première extrémité 22 est une extrémité distale par rapport au socle de support 4.

Le dispositif de retenue et libération 20 comporte par ailleurs au moins un mécanisme de maintien et relâchement 6, du type HDRM, disposé à une deuxième extrémité 23 du tirant 3, qui est une extrémité proximale dans cet exemple, le mécanisme de maintien et relâchement 6 étant solidaire du socle de support 4. Il est à noter que les première et deuxième extrémités 22 et 23 correspondent à des portions d'extrémité.

Le mécanisme de maintien et relâchement 6 est configuré pour retenir le tirant 3 préchargé en configuration de lancement, et pour libérer le tirant 3 en configuration de déploiement de manière à transformer l'énergie de déformation E_{def max} en une énergie cinétique avec une vitesse initiale déterminée de déplacement v₀ du tirant 3.

Le dispositif de retenue et libération 20 comprend en outre un système d'amortissement 10 magnétique. Un tel système d'amortissement 10 est adapté pour des allongements de tirant de grande envergure, comme c'est le cas dans l'exemple illustré au vu des dimensions du tirant 3.

Par « système d'amortissement adapté pour des allongements de tirant de grande envergure », on entend par exemple un système d'amortissement adapté pour des allongements compris entre 1 et 10 mm pour des tirants de longueur comprise entre 0,5 m et 10 m....

Le système d'amortissement 10 comporte au moins un tube 11, dans cet exemple un tube 11, électriquement conducteur, ayant deux extrémités ouvertes 25 formant un passage traversant 26. Le tube 11 est disposé autour du tirant 3, entre la tête 21 et le mécanisme de maintien et relâchement 6. Le tube 11 s'étend selon l'axe longitudinal X. Le tirant 3 traverse le tube 11 dans sa longueur, de préférence en son centre. Le tube 11 est fixe relativement au socle de support 4 au moins en configuration de lancement et est relié au socle de support 4 ou au système embarqué 2, dans cet exemple au socle de support 4.

Le tube 11 présente dans cet exemple une section cylindrique de diamètre moyen compris entre 10 mm et 50 mm, dans cet exemple égal à 20 mm et présente une épaisseur comprise entre 1 mm et 5 mm, dans cet exemple égale à 2 mm. Le tube 11 peut être fileté, ou non. Il peut former une vis sans fin, creuse.

Toujours dans cet exemple, le tube 11 est réalisé en un matériau métallique avec une conductivité supérieure à 10⁶ Ω⁻¹.m⁻¹, de préférence supérieure à 10*10⁶ Ω⁻¹.m⁻¹, étant de préférence réalisé en aluminium, choisi pour sa performance de dissipation et sa masse volumique. En effet, la conductivité de l'aluminium Al 6061 T6, par exemple, est considérée égale à 2,49.10⁷ Ω⁻¹.m⁻¹. Le tube 11 peut ne pas être réalisé dans un matériau ferromagnétique.

Le système d'amortissement 10 comporte également au moins un aimant 12 permanent, dans cet exemple plusieurs aimants 12 schématiquement représentés avec un seul aimant 12 dans un souci de clarté du dessin, fixé au tirant 3 et intercalé entre le tirant 3 et le tube 11. L'aimant 12 et le tube 11 sont configurés de manière à ce que la vitesse de déplacement de l'aimant 12, correspondant à la vitesse de déplacement du tirant 3, l'aimant 12 étant fixé au tirant 3, en configuration de déploiement crée des courants de Foucault dans le tube 11 de manière à dissiper l'énergie cinétique en chaleur et ainsi réduire la vitesse de déplacement du tirant 3 jusqu'à une vitesse finale v_{f} négligeable ou nulle après que l'aimant 12, et donc le tirant 3, a parcouru une distance déterminée dₘₐₓ en vis-à-vis du tube 11, relativement à celui-ci. Cette configuration de déploiement maximum est illustrée sur la figure 2. Ainsi la tête 21 a un débattement linéaire maximum L3.

Avantageusement, le système d'amortissement 10 comporte plusieurs aimants permanents, dont le moment magnétique est plus ou moins élevé pour amortir plus ou moins la course du tirant 3. Il est à noter que l'effort d'amortissement est proportionnel à la vitesse d'éjection, c'est-à-dire à la vitesse initiale v₀. Le moment magnétique peut être compris entre 1 et 20 A.m², dans cet exemple 8A.m².

Le tirant 3 est réalisé de préférence dans un matériau non magnétique pour éviter de perturber le champ magnétique dans le tube 11 et pour maximiser les courants de Foucault créés.

Comme visible sur la figure 1 par exemple, le dispositif de retenue et libération 20 comporte un espace de dégagement dans le prolongement de la tête 21. Ainsi le dispositif de retenue et libération peut être dépourvu d'attrape-boulon pour la tête. Ainsi, la masse est réduite et les chocs générés par la présence d'attrape-boulons sont évités.

La longueur L2 du tube 11 s'étendant vers la tête 21, depuis l'aimant 12, est supérieure à la distance déterminée de déplacement dₘₐₓ du tirant 3 d'au moins un écart déterminé, de façon à éviter les effets de bord. Le tube dépasse toujours de part et d'autre de l'aimant et génère des courants de Foucault en fonction du paramètre vitesse de l'aimant, la géométrie du tube par rapport à l'aimant restant inchangée. La longueur totale L1 du tube 11 est au moins égale à la longueur d'éjection, c'est-à-dire à la distance déterminée de déplacement dₘₐₓ du tirant 3, dans cet exemple 25 cm.

Il est à noter que la distance déterminée de déplacement dₘₐₓ est la distance maximale parcourue initialement par le tirant 3 une fois la configuration de déploiement enclenchée. Il est à noter que cette distance sera ultérieurement réduite en une distance finale d_{f} inférieure à dₘₐₓ, du fait de la présence de ressort(s) de rappel, dans cet exemple, comme cela sera détaillé par la suite. La distance déterminée de déplacement dₘₐₓ est illustrée sur la figure 2 tandis que la distance déterminée de déplacement d_{f} est illustrée sur la figure 3.

Le dispositif de retenue et libération 20 comporte dans cet exemple un ensemble de guidage 14 configuré pour guider de manière linéaire le tirant 3 dans son déplacement, notamment relativement au tube 11. L'ensemble de guidage 14 comporte, toujours dans cet exemple, au moins un guide 15, 19 disposé selon l'axe longitudinal X du tirant 3 et fixe par rapport au tirant 3 ou par rapport au socle de support 4 au moins en configuration de lancement.

Dans cet exemple, l'ensemble de guidage 14 comporte un guide 15, notamment disposé à proximité, voire contre l'aimant 12, et fixe par rapport au tirant 3. Le guide 15 permet d'assurer le guidage coulissant en translation du tirant 3 par rapport au tube 11, puisqu'il s'étend entre ceux-ci.

Il peut y avoir plusieurs guides 15, par exemple trois guides 15, s'étendant entre le tirant 3 et le tube 11, en fonction de la longueur du tirant 3 par exemple, et disposés à intervalles, notamment réguliers, calculés pour éviter le flambage du tirant 3. En effet, le flambage qui est une déformation en S est créé par l'onde mécanique qui se propage dans le tirant 3 et donc empêché par la présence du ou des guides 15 s'ils sont spécifiquement disposés au niveau des ventres de flambage. La distance entre deux guides 15 peut être inférieure à 500 mm. Chaque guide 15 fixe par rapport au tirant 3 est par exemple disposé à une distance déterminée de la tête 21 du tirant 3 en fonction d'au moins un ventre de flambage déterminé en fonction de la vitesse initiale de déplacement v₀ du tirant 3, de la longueur du tirant 3 et de la distance de l'aimant 12 par rapport à la tête 21. On note que le tube 11, qui joue un rôle dans l'amortissement du tirant 3, participe également au guidage du tirant 3.

Par ailleurs, l'ensemble de guidage 14 comporte au moins un guide 19 fixe par rapport au système embarqué 2 ou à l'engin spatial, dans cet exemple deux guides 19, formant des paliers aptes à coulisser relativement au tirant 3. De tels guides 19 permettent de guider le tirant 3 relativement au système embarqué 2.

Toujours dans l'exemple illustré, le dispositif de retenue et libération 20 comporte en outre au moins un ressort de rappel. Dans cet exemple deux ressorts de rappel 17, 18 sont disposés chacun autour du tirant 3 et venant en appui respectivement, au moins temporaire, contre un élément solidaire du tirant 3, dans cet exemple contre une butée 16 présente sur le tirant 3 ou la tête 21, et contre un élément solidaire du socle de support 4, dans cet exemple un des guides 19. Une légère contrainte de compression peut être conférée aux ressorts de rappel 17 et 18 en configuration de lancement, par exemple 10 N pour le ressort 18 et 0.1N pour le ressort 17. De tels ressorts de rappel 17 et 18 permettent, en fin de configuration de déploiement, après déplacement déterminé du tirant 3, de ramener le tirant 3 libéré dans une position finale prédéterminée, différente de la position initiale au lancement. Cette position finale prédéterminée du tirant 3, illustrée sur la figure 3, correspond à une distance finale de déplacement d_{f} de l'aimant 12 inférieure à la distance de déplacement déterminée dₘₐₓ de l'aimant 12, ou du tirant 3. Un tel mouvement de retour est optionnel, le tirant pouvant être stoppé par les courants de Foucault uniquement, mais dans ce cas possiblement à une position qui serait moins prédictible ou répétable.

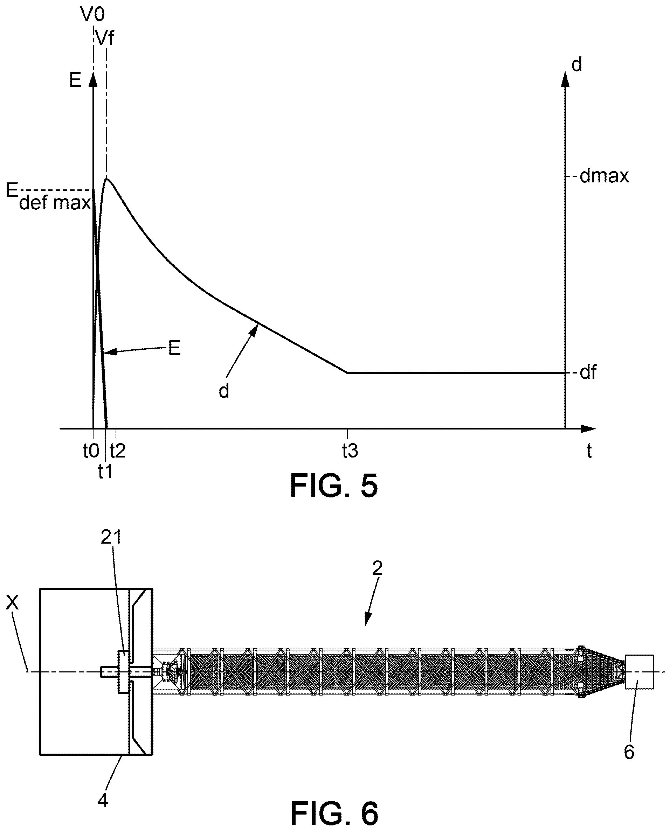

Le déplacement du tirant 3 et l'évolution de l'énergie en fonction du temps sont représentés sur la figure 5.

L'énergie de déformation stockée dans le tirant 3 en configuration de lancement est référencée E_{def max}. On considère que toute cette énergie est transformée en énergie cinétique. La force d'amortissement principale est générée par le système d'amortissement 10

A t0, en configuration de lancement, le tirant 3 est maintenu par le mécanisme de maintien et relâchement 6, dans un état préchargé. Le système de mise en précharge 5 est de préférence configuré de telle sorte que la précharge dans le tirant 3 créée par le système de mise en précharge 5 en configuration de lancement soit comprise entre 1N et 1000kN, notamment supérieure à 500 N, voire supérieure à 1000 N. Le système de mise en précharge 5 est configuré de telle sorte que l'énergie de déformation prédéterminée maximale E_{def max} stockée dans le tirant 3 en configuration de lancement est supérieure à 10 Joules, voire supérieure à 50 Joules.

Juste après t0, lorsque le déploiement est déclenché, le mécanisme de maintien et relâchement 6 libère le tirant 3 préchargé avec une énergie de déformation maximale E_{def max} qui se transforme en énergie cinétique déplaçant le tirant 3 avec une vitesse de déplacement initiale v₀. L'énergie de déformation est entièrement transformée en énergie cinétique à t1. La vitesse de déplacement initiale v₀ du tirant 3 en configuration de déploiement est par exemple supérieure ou égale à 0,1m.s⁻¹. Cependant, le système d'amortissement 10, avec l'aimant 12 qui est entraîné en translation avec le tirant 3 relativement au tube 11, dissipe très rapidement toute l'énergie cinétique en chaleur, par phénomène des courants de Foucault. L'énergie est entièrement dissipée et devient nulle à t2, de même que la vitesse de déplacement du tirant 3. La dissipation de l'énergie cinétique à t2 intervient après la transformation de l'énergie de déformation en énergie cinétique à t1. Le tirant 3 est arrêté à la distance de déplacement déterminée dₘₐₓ. Le déplacement du tirant 3 est linéaire. On prévoit notamment un ensemble de guidage 14.

Alors, la présence des ressorts de rappel 17 et 18 rappelle à faible vitesse le tirant 3 en direction inverse, jusqu'à atteindre à t3 une distance finale d_{f}, position finale illustrée sur la figure 3 et dans laquelle le tirant 3 est stabilisé et immobile. L'action de ces ressorts 17 et 18 est négligeable jusqu'à ce que l'aimant ait atteint une vitesse nulle ou négligeable. Ainsi ces ressorts n'interviennent pas dans la dissipation de l'énergie cinétique du tirant. La distance finale d_{f} correspond au moins à l'allongement du tirant 3 après disparition de l'énergie de déformation générée par la précharge. La distance d_{f} est maîtrisée et donc prédéterminée, de par le choix et la présence des ressorts de rappel 17 et 18 ainsi que par leur précontrainte, laquelle est faible relativement à la précharge du tirant 3 en configuration de lancement, étant par exemple de l'ordre de 0,2 Joule. Les ressorts de rappel 17 et 18 permettent également d'éviter des chocs sur le mouvement de retour.

La distance de déplacement déterminée dₘₐₓ de l'aimant 12 du tirant 3 est de préférence supérieure à 50 mm, étant de préférence comprise entre 200 mm et 350 mm, dans cet exemple égale à 250 mm. Il est à noter que l'aimant 12 présente de préférence un moment magnétique choisi en fonction de cette distance de déplacement déterminée dₘₐₓ et en fonction de l'énergie de déformation E_{def max}.

Après déploiement, dû au fait que la précharge dans le tirant 3 est relâchée, le tirant 3 subit un allongement de sa longueur, c'est-à-dire qu'il a une longueur légèrement supérieure à sa longueur initiale en configuration de lancement. Par exemple, si le tirant 3 présente une longueur en configuration de lancement de 200 mm, alors cette longueur sera par exemple de 204 mm après stabilisation en position finale. On note qu'on ne cherche pas à ce que le tirant 3 redevienne solidaire du mécanisme de maintien et relâchement 6 en position finale. Ainsi, la distance de déplacement finale d_{f} est de préférence au moins égale à l'allongement du tirant 3, qui est dans l'exemple indiqué de 4 mm.

L'amortissement créé par le système d'amortissement 10 par courants de Foucault est un amortissement visqueux, proportionnel à la vitesse, ne créant pas de frottement et ne créant pas d'effort à vitesse nulle, ou plus précisément ne créant pas d'effort à vitesse nulle, en l'absence de champ magnétique perturbateur externe, qui dans le cas de l'environnement spatial a un impact quasi négligeable sur le système.

Dans l'exemple des figures 1 à 5, et comme visible sur la figure 4, le système embarqué 2 est un mât télescopique comportant une tige filetée creuse d'entraînement lors de son déploiement et constituant le tube 11. Dans ce cas, l'engin spatial 1 transportant un tel système embarqué 2 solidarisé à l'engin spatial 1 en configuration de lancement à l'aide du dispositif de retenue et libération 20 est un satellite. On note que le tube 11 sert à la fois de tige d'entraînement lors du déploiement et de partie du système d'amortissement 10.

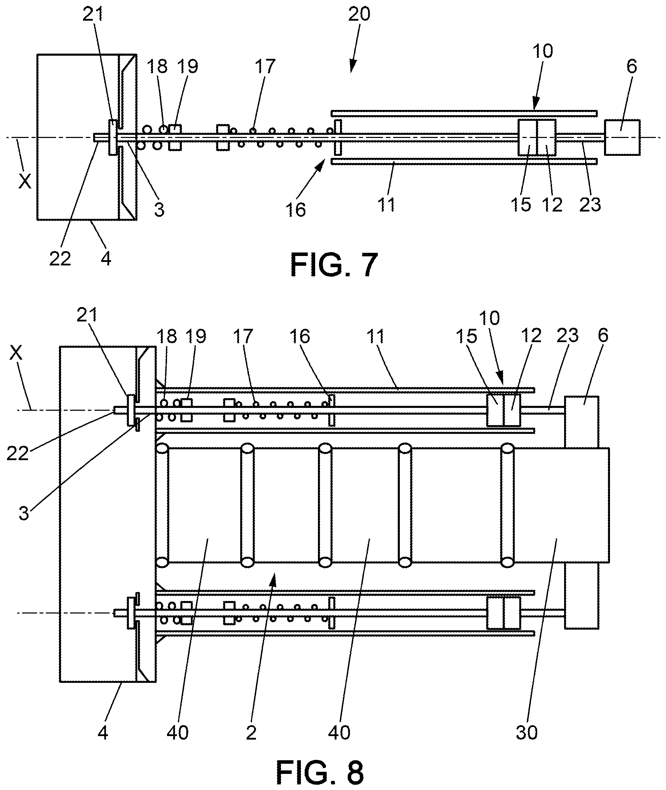

C'est également le cas de l'exemple des figures 6 et 7. Toutefois, cet exemple diffère de celui des figures 1 à 5 en ce que le mécanisme de maintien et relâchement 6 est disposé à la deuxième extrémité 23 du tirant 3 qui est une extrémité distale par rapport au socle de support 4, tandis que la tête 21 du système de mise en précharge 5 est disposée à la première extrémité 22 du tirant 3 qui est une extrémité proximale par rapport au socle de support 4, dans cet exemple.

Ainsi, le tirant 3 reste attaché au satellite en position finale.

On a illustré sur la figure 8 un autre exemple dans lequel le système embarqué 2 est une pile 30 de satellites 40. Dans ce cas, l'engin spatial 1 transportant un tel système embarqué 2 solidarisé à l'engin spatial 1 en configuration de lancement à l'aide du dispositif de retenue et libération 20 est un lanceur de satellites. Le dispositif de retenue et libération 20 comporte une pluralité de tirants 3, dont deux sont représentés sur la figure 8. Comme visible, pour chaque tirant 3, il y a un mécanisme de maintien et relâchement 6, un système de mise en précharge 5, un tube 11, etc.

Dans cet exemple, le tirant 3 reste attaché au lanceur.

Bien entendu, la présente divulgation n'est pas limitée aux exemples qui viennent d'être décrits.

En particulier, tout dispositif de retenue et libération d'un système embarqué par rapport à un engin spatial destiné à des applications terrestres ou aéronautiques, des applications en orbite géostationnaires ou des applications extra-planétaires peut être inclus. Cependant, une application en orbite basse, terrestre ou d'un autre astre, n'est pas adaptée du fait de l'interaction entre le ou les aimants permanents du système d'amortissement et le champ magnétique de l'astre.

## Revendications

1. Dispositif de retenue et libération (20) d'un système embarqué (2) par rapport à un engin spatial (1),
le dispositif de retenue et libération (20) comprenant :
- au moins un socle de support (4) solidaire de l'engin spatial (1), le dispositif de retenue et libération étant configuré pour retenir le système embarqué (2) contre le socle de support (4) en configuration de lancement et pour libérer le système embarqué (2) en configuration de déploiement,
- au moins un tirant (3), ledit tirant (3) étant étiré selon un axe longitudinal (X) en configuration de lancement,
- au moins un système de mise en précharge (5) configuré pour précharger ledit tirant (3) en configuration de lancement avec une énergie de déformation déterminée, ledit système de mise en précharge (5) comprenant une tête (21) disposée à une première extrémité (22) dudit tirant (3),
- au moins un mécanisme de maintien et relâchement (6) disposé à une deuxième extrémité (23) dudit tirant (3), configuré pour retenir ledit tirant (3) préchargé en configuration de lancement, et pour libérer ledit tirant (3) en configuration de déploiement de manière à transformer ladite énergie de déformation en une énergie cinétique avec une vitesse initiale déterminée de déplacement (v₀) du tirant (3),
**caractérisé en ce que** le dispositif de retenue et libération (20) comprend en outre :
- un système d'amortissement (10) magnétique comportant :
∘ au moins un tube (11) électriquement conducteur ayant deux extrémités ouvertes (25) formant un passage traversant (26), ledit tube (11) étant disposé autour du tirant (3), entre la tête (21) et le mécanisme de maintien et relâchement (6), ledit tube (11) étant fixe relativement au socle de support (4) au moins en configuration de lancement et étant relié au socle de support (4) ou au système embarqué (2),
∘ au moins un aimant (12) permanent fixé au tirant (3) et intercalé entre le tirant (3) et ledit au moins un tube (11),
ledit au moins un aimant (12) et ledit au moins un tube (11) étant configurés de manière à ce que la vitesse de déplacement dudit au moins un aimant (12) en configuration de déploiement crée des courants de Foucault dans ledit au moins un tube (11) de manière à dissiper l'énergie cinétique en chaleur et ainsi réduire la vitesse de déplacement du tirant (3) jusqu'à une vitesse finale négligeable ou nulle après que ledit au moins un aimant a parcouru une distance déterminée (dₘₐₓ) en vis-à-vis dudit au moins un tube (11).

2. Dispositif de retenue et libération (20) selon l'une des revendications précédentes, comportant un espace de dégagement dans le prolongement de la tête (21).

3. Dispositif de retenue et libération (20) selon l'une quelconque des revendications précédentes, dans lequel ladite distance de déplacement déterminée (dₘₐₓ) dudit au moins un aimant (12) est supérieure à 50 mm, étant de préférence comprise entre 200 mm et 350 mm.

4. Dispositif de retenue et libération (20) selon l'une quelconque des revendications précédentes, dans lequel la longueur dudit au moins un tube (11) s'étendant vers la tête (21), à partir dudit au moins un aimant (12), est supérieure à ladite distance déterminée de déplacement du tirant (3) d'au moins un écart déterminé.

5. Dispositif de retenue et libération (20) selon l'une quelconque des revendications précédentes, comportant en outre un ensemble de guidage (14 ; 15, 19) configuré pour guider de manière linéaire le tirant (3) dans son déplacement, l'ensemble de guidage (14) comportant au moins un guide (15, 19) disposé selon l'axe longitudinal (X) du tirant (3) et fixe par rapport au tirant (3) ou par rapport au socle de support (4).

6. Dispositif de retenue et libération (20) selon l'une quelconque des revendications précédentes, comportant en outre au moins un ressort de rappel (17, 18) disposé autour du tirant (3) et venant en appui, au moins temporaire, contre un élément solidaire du tirant (3), et contre un élément solidaire du socle de support (4), au moins en configuration de lancement, pour ramener le tirant (3) libéré dans une position finale prédéterminée, ladite position finale prédéterminée du tirant (3) correspondant à une distance finale de déplacement (d_{f}) dudit au moins un aimant (12) inférieure à ladite distance de déplacement déterminée (dₘₐₓ) dudit au moins un aimant (12).

7. Dispositif de retenue et libération (20) selon l'une quelconque des revendications précédentes, dans lequel le tirant (3) présente un élancement au moins égal à 10, de préférence supérieur ou égal à 100, le tirant (3) présentant de préférence une longueur supérieure ou égale à 0,5 m, notamment une longueur comprise entre 0,5 m et 10 m, notamment entre 1 m et 3 m, le tirant présentant de préférence un diamètre inférieur ou égal à 100 mm, notamment un diamètre compris entre 1 m et 20 mm.

8. Dispositif de retenue et libération (20) selon l'une quelconque des revendications précédentes, dans lequel ledit au moins un tube (11) est réalisé en un matériau métallique avec une conductivité supérieure à 10⁶, de préférence supérieure à 10*10⁶, étant de préférence réalisé en aluminium.

9. Dispositif de retenue et libération (20) selon l'une quelconque des revendications 1 à 8, dans lequel le système embarqué (2) est un mât télescopique comportant une tige filetée creuse d'entraînement lors de son déploiement et constituant ledit au moins un tube (11).

10. Dispositif de retenue et libération (20) selon l'une quelconque des revendications 1 à 8, dans lequel le système embarqué (2) est une pile de satellites.

11. Dispositif de retenue et libération (20) selon l'une quelconque des revendications précédentes, dans lequel le système de mise en précharge (5) est configuré de telle sorte que la précharge dans le tirant (3) créée par le système de mise en précharge (5) en configuration de lancement soit comprise entre 1N et 1000kN, notamment supérieure à 500 N, voire supérieure à 1000 N.

12. Dispositif de retenue et libération (20) selon l'une quelconque des revendications précédentes, dans lequel le système de mise en précharge (5) est configuré de telle sorte que ladite énergie de déformation déterminée stockée dans le tirant (3) en configuration de lancement est supérieure à 10 Joules, étant par exemple environ égale à 60 Joules.

13. Engin spatial (1) transportant un système embarqué (2) solidarisé à l'engin spatial (1), en configuration de lancement, par au moins un dispositif de retenue et libération (20) selon l'une quelconque des revendications précédentes.

## Patentansprüche

1. Halte- und Lösevorrichtung (20) eines Bordsystems (2) bezüglich eines Raumfahrzeugs (1),
wobei die Halte- und Lösevorrichtung (20) Folgendes umfasst:
- mindestens einen Stützsockel (4), der mit dem Raumfahrzeug (1) fest verbunden ist, wobei die Halte- und Lösevorrichtung dazu konfiguriert ist, das Bordsystem (2) in einer Startkonfiguration gegen den Stützsockel (4) zu halten und das Bordsystem (2) in einer Entfaltungskonfiguration zu lösen,
- mindestens eine Zugstange (3), wobei die besagte Zugstange (3) in der Startkonfiguration entlang einer Längsachse (X) gestreckt ist,
- mindestens ein Vorspannsystem (5), das dazu konfiguriert ist, die besagte Zugstange (3) in der Startkonfiguration mit einer bestimmten Verformungsenergie vorzuspannen, wobei das besagte Vorspannsystem (5) einen Kopf (21) umfasst, der an einem ersten Ende (22) der besagten Zugstange (3) angeordnet ist,
- mindestens einen Halte- und Freigabemechanismus (6), der an einem zweiten Ende (23) der besagten Zugstange (3) angeordnet ist, konfiguriert, um die besagte vorgespannte Zugstange (3) in der Startkonfiguration zu halten, und um die besagte Zugstange (3) in der Entfaltungskonfiguration zu lösen, um die besagte Verformungsenergie in kinetische Energie mit einer bestimmten anfänglichen Verschiebungsgeschwindigkeit (v₀) der Zugstange (3) umzuwandeln,
**dadurch gekennzeichnet, dass** die Halte- und Lösevorrichtung (20) ferner Folgendes umfasst:
- ein magnetisches Dämpfungssystem (10), umfassend:
• mindestens ein elektrisch leitendes Rohr (11) mit zwei offenen Enden (25), die einen Durchgang (26) bilden, wobei das besagte Rohr (11) um die Zugstange (3) herum, zwischen dem Kopf (21) und dem Halte- und Freigabemechanismus (6) angeordnet ist, wobei das besagte Rohr (11) zumindest in der Startkonfiguration relativ zum Stützsockel (4) fixiert ist und mit dem Stützsockel (4) oder dem Bordsystem (2) verbunden ist,
• mindestens einen Permanentmagneten (12), der an der Zugstange (3) befestigt und zwischen der Zugstange (3) und dem besagten mindestens einen Rohr (11) eingefügt ist,
wobei der besagte mindestens eine Magnet (12) und das besagte mindestens eine Rohr (11) so konfiguriert sind, dass die Verschiebungsgeschwindigkeit des besagten mindestens einen Magneten (12) in der Entfaltungskonfiguration Wirbelströme in dem besagten mindestens einen Rohr (11) erzeugt, um die kinetische Energie in Wärme abzuführen und so die Verschiebungsgeschwindigkeit der Zugstange (3) auf eine vernachlässigbare oder Null-Endgeschwindigkeit zu reduzieren, nachdem der besagte mindestens eine Magnet eine bestimmte Entfernung (dₘₐₓ) gegenüber dem besagten mindestens einen Rohr (11) zurückgelegt hat.

2. Halte- und Lösevorrichtung (20) nach einem der vorhergehenden Ansprüche, die einen Freiraum in der Verlängerung des Kopfes (21) aufweist.

3. Halte- und Lösevorrichtung (20) nach einem der vorhergehenden Ansprüche, wobei die besagte bestimmte Verschiebewegstrecke (dₘₐₓ) des besagten mindestens einen Magneten (12) größer als 50 mm ist und vorzugsweise zwischen 200 mm und 350 mm liegt.

4. Halte- und Lösevorrichtung (20) nach einem der vorhergehenden Ansprüche, wobei die Länge des besagten mindestens einen Rohrs (11), das sich von dem besagten mindestens einen Magneten (12) aus zum Kopf (21) erstreckt, um mindestens eine bestimmte Abweichung größer ist als die besagte bestimmte Verschiebewegstrecke der Zugstange (3).

5. Halte- und Lösevorrichtung (20) nach einem der vorhergehenden Ansprüche, die ferner eine Führungsanordnung (14; 15, 19) umfasst, die dazu konfiguriert ist, die Zugstange (3) linear bei ihrer Verschiebung zu führen, wobei die Führungsanordnung (14) mindestens eine Führung (15, 19) umfasst, die entlang der Längsachse (X) der Zugstange (3) angeordnet und relativ zur Zugstange (3) oder relativ zum Stützsockel (4) fixiert ist.

6. Halte- und Lösevorrichtung (20) nach einem der vorhergehenden Ansprüche, ferner umfassend mindestens eine Rückstellfeder (17, 18), die um die Zugstange (3) angeordnet ist und, zumindest zeitweise, an einem mit der Zugstange (3) integralen Element und an einem mit dem Stützsockel (4) integralen Element anliegt, zumindest in der Startkonfiguration, um die gelöste Zugstange (3) in eine vorbestimmte Endposition zurückzuführen, wobei die besagte vorbestimmte Endposition der Zugstange (3) einer endgültigen Verschiebewegstrecke (d_{f}) des besagten mindestens einen Magneten (12) entspricht, die kleiner ist als die bestimmte Verschiebewegstrecke (dₘₐₓ) des besagten mindestens einen Magneten (12).

7. Halte- und Lösevorrichtung (20) nach einem der vorhergehenden Ansprüche, wobei die Zugstange (3) einen Schlankheitsgrad von mindestens 10, vorzugsweise größer oder gleich 100 aufweist, die Zugstange (3) vorzugsweise eine Länge größer oder gleich 0,5 m, insbesondere eine Länge zwischen 0,5 m und 10 m, insbesondere zwischen 1 m und 3 m aufweist, die Zugstange vorzugsweise einen Durchmesser kleiner oder gleich 100 mm, insbesondere einen Durchmesser zwischen 1 m und 20 mm aufweist.

8. Halte- und Lösevorrichtung (20) nach einem der vorhergehenden Ansprüche, wobei das besagte mindestens eine Rohr (11) aus einem metallischen Material mit einer Leitfähigkeit von mehr als 10⁶, vorzugsweise mehr als 10·10⁶, hergestellt ist, wobei es vorzugsweise aus Aluminium hergestellt ist.

9. Halte- und Lösevorrichtung (20) nach einem der Ansprüche 1 bis 8, wobei das Bordsystem (2) ein Teleskopmast ist, der eine hohle Gewindeantriebsstange bei seiner Entfaltung umfasst und das besagte mindestens eine Rohr (11) bildet.

10. Halte- und Lösevorrichtung (20) nach einem der Ansprüche 1 bis 8, wobei das Bordsystem (2) ein Satellitenstapel ist.

11. Halte- und Lösevorrichtung (20) nach einem der vorhergehenden Ansprüche, wobei das Vorspannsystem (5) so konfiguriert ist, dass die Vorspannung in der Zugstange (3), die durch das Vorspannsystem (5) in der Startkonfiguration erzeugt wird, zwischen 1N und 1000kN, insbesondere größer als 500 N, oder sogar größer als 1000 N liegt.

12. Halte- und Lösevorrichtung (20) nach einem der vorhergehenden Ansprüche, wobei das Vorspannsystem (5) so konfiguriert ist, dass die besagte bestimmte Verformungsenergie, die in der Zugstange (3) in der Startkonfiguration gespeichert ist, größer als 10 Joule ist, wobei sie beispielsweise ungefähr 60 Joule beträgt.

13. Raumfahrzeug (1), das ein Bordsystem (2) transportiert, das mit dem Raumfahrzeug (1) in einer Startkonfiguration durch mindestens eine Halte- und Lösevorrichtung (20) nach einem der vorhergehenden Ansprüche fest verbunden ist.

## Claims

1. Retaining and releasing device (20) for an on-board system (2) relative to a spacecraft (1),
the retaining and releasing device (20) comprising:
- at least one support base (4) integral with the spacecraft (1), the retaining and releasing device being configured to retain the on-board system (2) against the support base (4) in a launch configuration and to release the on-board system (2) in a deployment configuration,
- at least one tie rod (3), said tie rod (3) being stretched along a longitudinal axis (X) in the launch configuration,
- at least one preloading system (5) configured to preload said tie rod (3) in the launch configuration with a determined deformation energy, said preloading system (5) comprising a head (21) disposed at a first end (22) of said tie rod (3),
- at least one retaining and release mechanism (6) disposed at a second end (23) of said tie rod (3), configured to retain said preloaded tie rod (3) in the launch configuration, and to release said tie rod (3) in the deployment configuration so as to transform said deformation energy into kinetic energy with a determined initial displacement speed (v₀) of the tie rod (3),
**characterized in that** the retaining and releasing device (20) further comprises:
- a magnetic damping system (10) comprising:
• at least one electrically conductive tube (11) having two open ends (25) forming a through passage (26), said tube (11) being disposed around the tie rod (3), between the head (21) and the retaining and release mechanism (6), said tube (11) being fixed relative to the support base (4) at least in the launch configuration and being connected to the support base (4) or to the on-board system (2),
• at least one permanent magnet (12) fixed to the tie rod (3) and interposed between the tie rod (3) and said at least one tube (11),
said at least one magnet (12) and said at least one tube (11) being configured so that the displacement speed of said at least one magnet (12) in the deployment configuration creates Eddy currents in said at least one tube (11) so as to dissipate the kinetic energy into heat and thus reduce the displacement speed of the tie rod (3) to a negligible or zero final speed after said at least one magnet has traveled a determined distance (dₘₐₓ) opposite said at least one tube (11).

2. Retaining and releasing device (20) according to any one of the preceding claims, comprising a clearance space in the extension of the head (21).

3. Retaining and releasing device (20) according to any one of the preceding claims, wherein said determined displacement distance (dₘₐₓ) of said at least one magnet (12) is greater than 50 mm, being preferably comprised between 200 mm and 350 mm.

4. Retaining and releasing device (20) according to any one of the preceding claims, wherein the length of said at least one tube (11) extending towards the head (21), from said at least one magnet (12), is greater than said determined displacement distance of the tie rod (3) by at least a determined deviation.

5. Retaining and releasing device (20) according to any one of the preceding claims, further comprising a guiding assembly (14; 15, 19) configured to guide the tie rod (3) linearly in its displacement, the guiding assembly (14) comprising at least one guide (15, 19) disposed along the longitudinal axis (X) of the tie rod (3) and fixed relative to the tie rod (3) or relative to the support base (4).

6. Retaining and releasing device (20) according to any one of the preceding claims, further comprising at least one return spring (17, 18) disposed around the tie rod (3) and bearing, at least temporarily, against an element integral with the tie rod (3), and against an element integral with the support base (4), at least in the launch configuration, to return the released tie rod (3) to a predetermined final position, said predetermined final position of the tie rod (3) corresponding to a final displacement distance (d_{f}) of said at least one magnet (12) that is less than the determined displacement distance (dₘₐₓ) of said at least one magnet (12).

7. Retaining and releasing device (20) according to any one of the preceding claims, wherein the tie rod (3) has a slenderness ratio of at least 10, preferably greater than or equal to 100, the tie rod (3) preferably having a length greater than or equal to 0.5 m, notably a length comprised between 0.5 m and 10 m, notably between 1 m and 3 m, the tie rod preferably having a diameter less than or equal to 100 mm, notably a diameter comprised between 1 m and 20 mm.

8. Retaining and releasing device (20) according to any one of the preceding claims, wherein said at least one tube (11) is made of a metallic material with a conductivity greater than 10⁶, preferably greater than 10·10⁶, being preferably made of aluminum.

9. Retaining and releasing device (20) according to any one of claims 1 to 8, wherein the on-board system (2) is a telescopic mast comprising a hollow threaded drive rod during its deployment and constituting said at least one tube (11).

10. Retaining and releasing device (20) according to any one of claims 1 to 8, wherein the on-board system (2) is a stack of satellites.

11. Retaining and releasing device (20) according to any one of the preceding claims, wherein the preloading system (5) is configured such that the preload in the tie rod (3) created by the preloading system (5) in the launch configuration is comprised between 1N and 1000kN, notably greater than 500 N, or even greater than 1000 N.

12. Retaining and releasing device (20) according to any one of the preceding claims, wherein the preloading system (5) is configured such that said determined deformation energy stored in the tie rod (3) in the launch configuration is greater than 10 Joules, being for example approximately equal to 60 Joules.

13. Spacecraft (1) transporting an on-board system (2) secured to the spacecraft (1), in a launch configuration, by at least one retaining and releasing device (20) according to any one of the preceding claims.
